# EUROPEAN PATENT SPECIFICATION

(11) **EP 3 162 630 B1**
(45) Date of publication and mention of the grant of the patent: **19.08.2020**
(21) Application number: 16171546.1
(22) Date of filing: 26.05.2016
(51) Int. Cl.: B60P 3/22

(54) **CASK VEHICLE AND VALVE FOR USE IN SUCH A VEHICLE**
BEHÄLTERFAHRZEUG UND VENTIL, DAS IN DEM FAHRZEUG VERWENDBAR IST
VÉHICULE CITERNE ET VANNE QUI PEUT ÊTRE UTILISÉE DANS LE VÉHICULE

(30) Priority: 28.05.2015 IT UB20151130
(43) Date of publication of application: 03.05.2017
(73) Proprietor: Battioni Pagani Pompe S.p.A., 43058 Sorbolo (Parma) (IT)
(72) Inventor: SONCINI, Fabio, 43125 PARMA (IT); FRANCALANCI, Fabio, 43123 PARMA (IT)
(74) Representative: Fanzini, Valeriano

(56) References cited:
- DE-A1- 3 636 731

## Description

This invention relates to a cask vehicle, more specifically a cask wagon or a tank truck.

This invention also relates to a valve, in particular of the gate-like type, preferably which can be used in the cask vehicle.

Known in the prior art are cask vehicles, in particular cask wagons, for transporting a fluid or semi-fluid material, preferably in the form of slurry or the like, which comprise a respective tank body defining a corresponding chamber for housing the material and means for conveying the material to the housing chamber of the tank to allow the suction of the material inside the chamber.

In the prior art cask vehicles, the tubular conveying means, preferably of the type articulated or mobile relative to the body of the vehicle, are associated with corresponding valve means, of the gate-like type, which are designed to be configured according to an open condition of conveying the material or according to a closed condition of conveying the material.

One problem felt, by those who use cask vehicles, relates to the unloading of the material which remains trapped in the means for conveying the material to the housing chamber, after the valve means have been closed.

In effect, due to the pressure difference which is created between the outside environment and the inside of the conveying means, the material remains trapped inside the tubular body of the conveying means.

This results in the material being unloaded in an unsuitable manner, whilst the vehicle is travelling, that is to say, in order to unload it before transport it is necessary to perform specific manoeuvres which mechanically stress the duct to enable the unloading of the material. Obviously, the mechanical operations on the duct require not insignificant execution times, and are annoying to carry out for the personnel, since it also needs to be carried out in a suitable location, to prevent damage or undesired soiling.

There are also prior art valves, in particular of the gate-like type, which carry out a two-way seal thanks to the contact of the outer peripheral edge of the shutter blade with a corresponding elastic outer profile.

One drawback of these two-way sealing valves relates to the actual sealing effectiveness of the valve, in particular when the material contains solid bodies. For example, in the case of the slurry, when there are branches of plants or similar materials, there is the risk of them becoming trapped between the outer profile of the shutter blade and the outer radially compliant ring for sealing against this, with consequent definition in-situ of an unwanted zone of escape of the slurry.

Moreover, the need is also felt in the sector of having valves, in particular of the gate-like type, which, besides being advantageously two-way, can also be easily made and have a relatively low construction cost.

Document DE 3636731 A1 discloses a cask vehicle according to the preamble of claim 1.

This invention therefore proposes a new solution as an alternative to the solutions known up to now and, more specifically, proposes to overcome one or more of the above mentioned drawbacks and/or problems and/or to meet one or more of the needs felt in the trade or inferable from the above.

The invention accordingly provides a cask vehicle, more specifically a cask wagon or a tank truck, for transporting a fluid or semi-fluid material, preferably in the form of slurry or the like, which comprises a tank body defining a chamber for housing the material and means for conveying the material, which connect the housing chamber with the outside environment, more specifically to allow the suction of the material inside the chamber; there are respective valve means, which are designed to open or close the passage of material between the conveying means and the material housing chamber; characterised in that it comprises means for unloading the material which remains entrapped in the material conveying means connecting the housing chamber with the outside environment.

In this way, it is possible to avoid having to perform excessive and undesirable operations for unloading the material trapped inside the conveying means, or prevent this unloading of the material occurring in a unwanted fashion.

According to the invention, a cask vehicle is provided, more specifically a cask wagon or a tank truck, for transporting a fluid or semi-fluid material, preferably in the form of slurry or the like, which comprises a tank body defining a chamber for housing the material and means for conveying the material, which connect the housing chamber with the outside environment, more specifically to allow the suction of the material inside the chamber; there are respective valve means, which are designed to open or close the passage of material between the conveying means and the material housing chamber; characterised in that the valve means comprise a body for supporting a corresponding shutter body, in particular for opening and closing the passage of material with the housing chamber; and in that the valve means comprise first elastic sealing means which are designed to engage a transversal face of the shutter body and second elastic sealing means which are designed to engage a transversal face opposite the shutter body.

In this way a two-way sealing valve is obtained which is safe and in particular overcomes the drawbacks determined by the presence of solid bodies in the material which passes through the valve.

This and other innovative aspects of the vehicle and/or the corresponding valve are set out in the appended claims and its technical features and advantages are apparent from the detailed description which follows of a preferred, advantageous embodiment of it, which must be considered purely as a non-limiting example. the description being made with reference to the accompanying drawings, in which:
- Figure 1 is a perspective view of a preferred embodiment of the cask vehicle according to this invention;

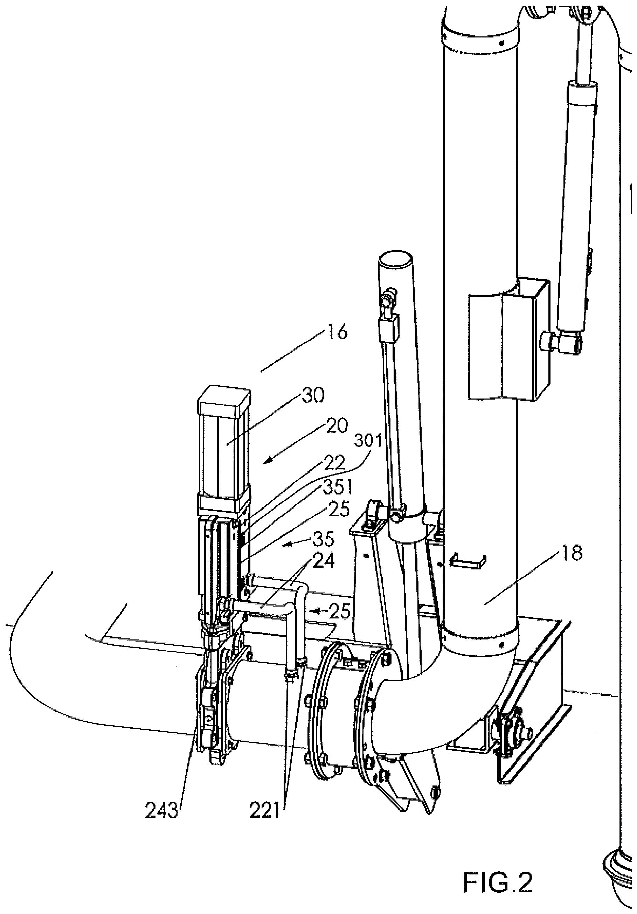

- Figure 2 is a perspective view of a detail relative to the valve means of the preferred embodiment of the vehicle;

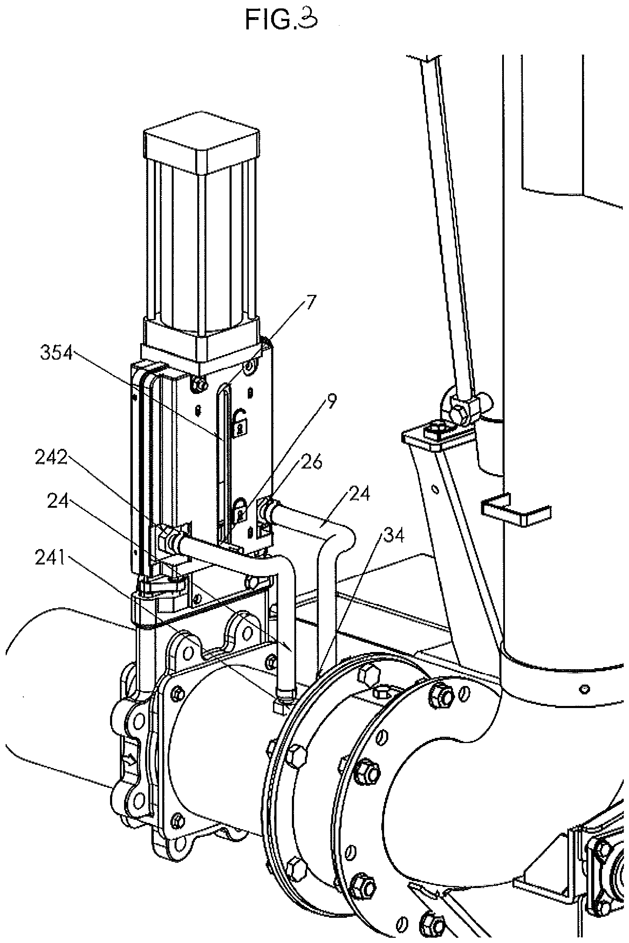

- Figure 3 is a front perspective view of the detail relative to the valve means of the preferred embodiment of the vehicle;
- Figure 4 is a perspective view of the preferred embodiment of the valve means according to this invention;

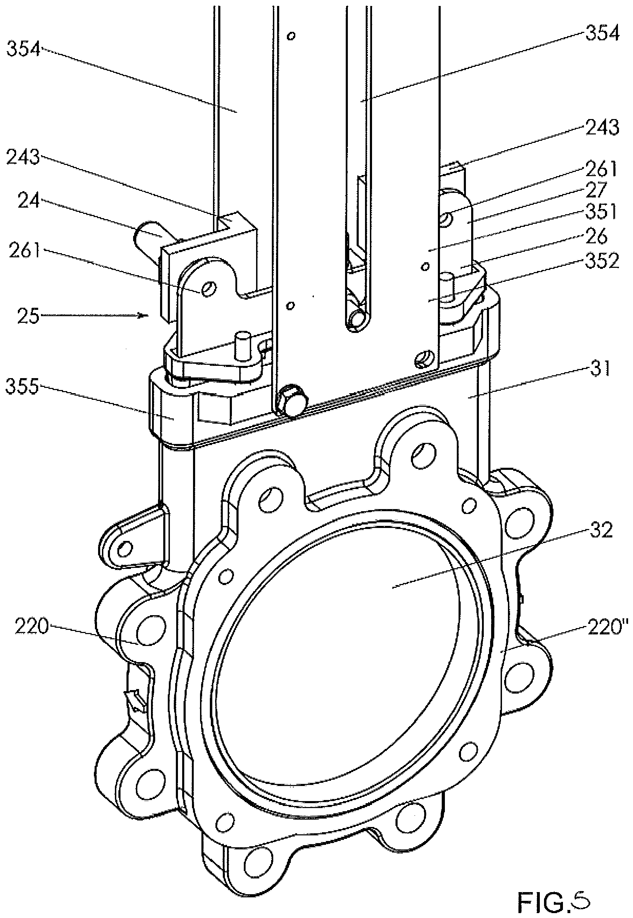

- Figure 5 is a perspective view of the detail relative to the lower part of the valve means according to preferred embodiment of this invention;

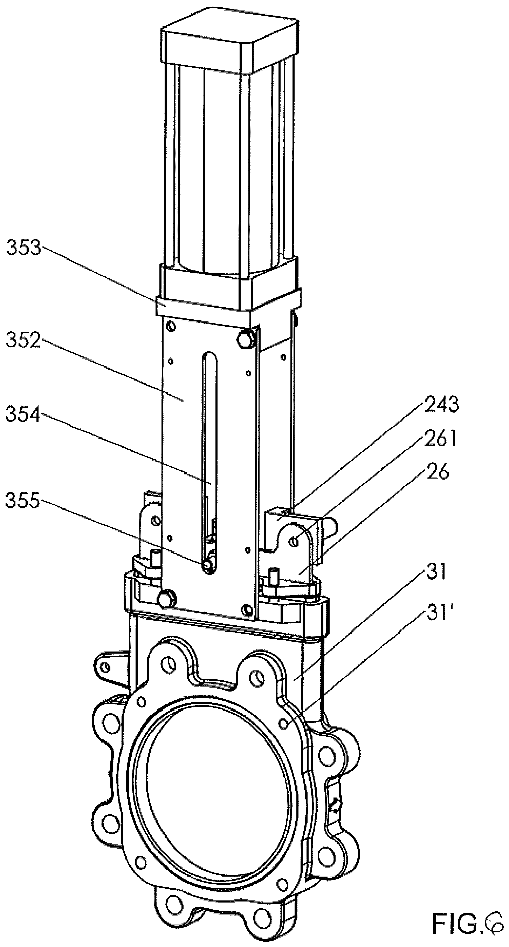

- Figure 6 is a perspective view of the preferred embodiment of the valve means according to this invention in an operating position with the valve open;

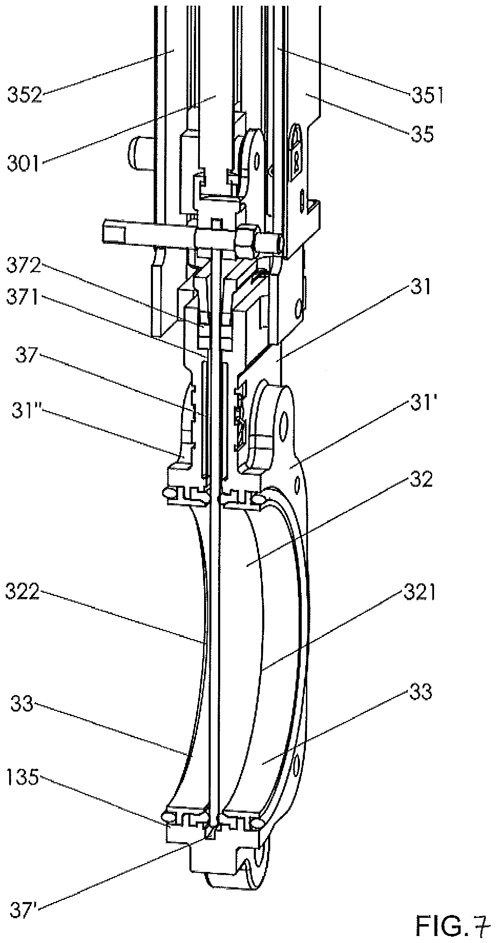

- Figure 7 is a cross section view of the preferred embodiment of the valve means according to this invention;

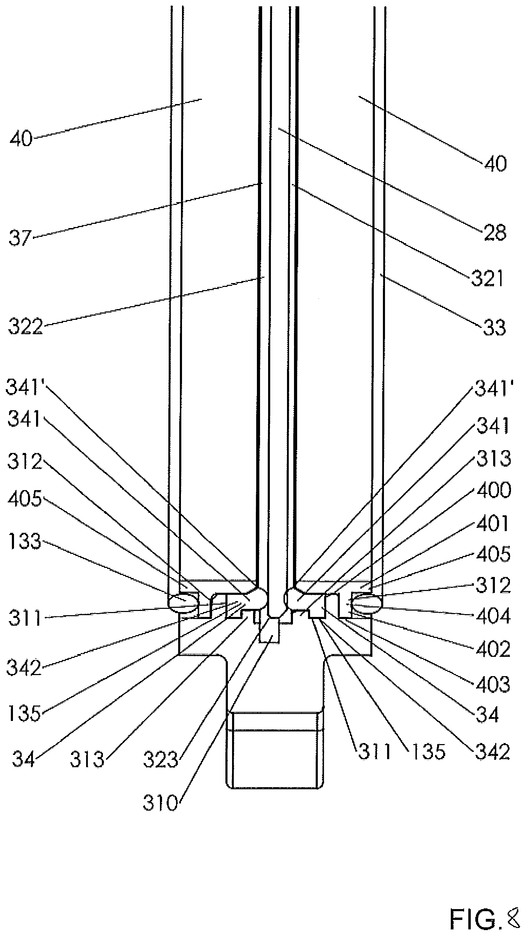

- Figure 8 is a cross section view of the lower part of the preferred embodiment of the valve means according to this invention;

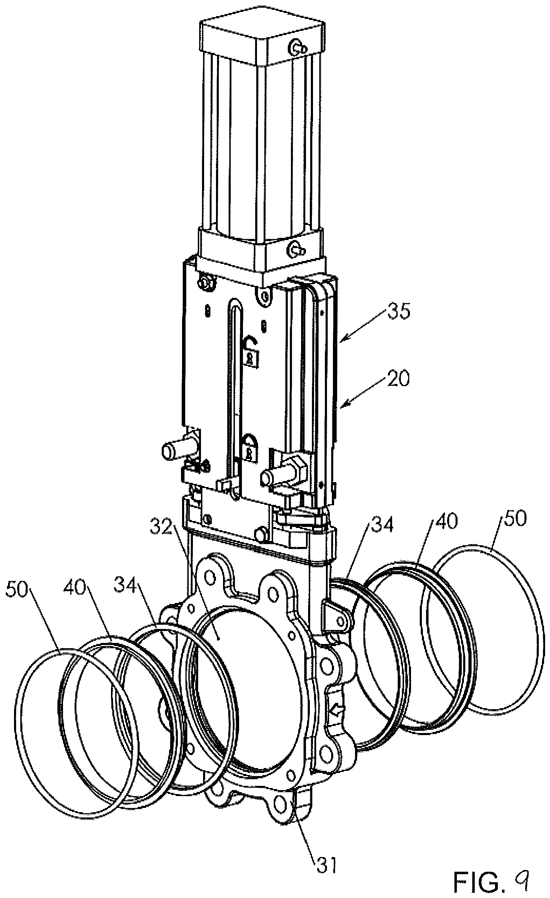

- Figure 9 is a partly exploded perspective view of the preferred embodiment of the valve means according to this invention.

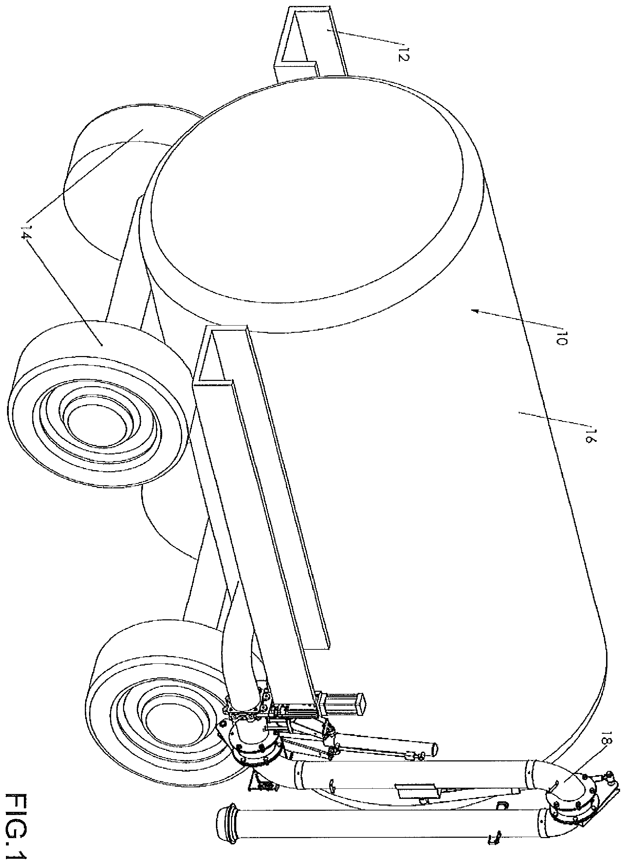

Figure 1 shows a preferred embodiment of the cask vehicle 10, in particular a cask wagon, for transporting a fluid or semi-fluid material, and preferably in the form of slurry or the like.

It will be understood, however, that this cask vehicle could also consist of a tank truck or any other vehicle having a respective tank.

As illustrated, the vehicle has a frame 12, which is movable preferably on wheels 14, and a tank body 16, the tank body defining a respective chamber for housing the material to be transported, and which is not particularly illustrated in the accompanying drawings.

The vehicle is also equipped with conveying means 18, defining corresponding means for conveying the material, which connect the chamber for housing the material with the outside environment, more specifically to allow the suction of the material inside the chamber.

As illustrated, the conveying means 18 are preferably in the form of respective tubular means, in particular of the articulated or movable type relative to the main part, or to the tank body 16, of the vehicle 10.

More specifically, the conveying means 18 are designed to move in an extended position for inserting the end of the conveying means in the tank, or zone, for picking up the fluid or slurry, and they are also designed to be positioned in a corresponding retracted position which allows an easy driving of the vehicle.

As shown in the following drawings, respective valve means 20 are provided, in particular upstream of the conveying means 18, which are designed to open and to close the passage of the material between the conveying means 18 and the material housing chamber of the tank body 16.

More specifically, as may be inferred from the drawings, the valve means 20 comprise a supporting body 31 for a corresponding shutter body 32, the shutter body 32 being conveniently movable for opening and closing a corresponding cavity 33, which is in particular defined by a corresponding cylindrical surface 135, and in such a way as to allow and interrupt the passage of the material towards the housing chamber of the tank body.

As may be inferred from the drawings, the valve means 20 also comprise the corresponding means for driving the shutter body 32, the drive means being, in particular, in the form of a respective actuator 30, in particular of the linear type, and especially in the form of a cylinder, or plunger, controlled by a respective fluid under pressure.

According to further embodiments, not illustrated, the drive means might also be configured in another way, for example they could also be in the form of manual control means.

In particular, the valve means 20 comprise a corresponding rod, which protrudes from the actuator means 30, connecting the actuator means 30 with the shutter body 32.

As will be described in more detail below, the valve means 20 are of the so-called "gate-like" type and comprise a respective shutter body 32, which is defined by a corresponding blade, or sheet, which is movable, in a translating fashion, in a respective plane transversal to the direction of passage of the material, in particular between a retracted open position for free passage of the material and an advanced position for closing the passage of the material.

More specifically, the shutter body 32 is movable, or translatable, in a direction perpendicular to the main direction of conveying, or crossing, of the valve means 20 by the material.

Advantageously, there are means 22 for unloading the material that remains trapped in the material conveying means 18.

In this way, it is possible to avoid having to perform excessive and undesirable operations for unloading the material trapped inside the conveying means, that is to say, prevent this unloading of the material occurring in a unwanted fashion.

Advantageously, the means 22 for unloading the material which remains trapped in the material conveying means 18 are in the form of means for automatically activating the unloading of the material.

In this way, the execution of this unloading operation occurs without a waste of time and annoyance for the personnel.

More specifically, the unloading means 22 of the material that remains trapped in the material conveying means 18 are designed to induce the unloading of the material when the valve means 20 are in closed condition of the passage of material.

Preferably, the means 22 for unloading the material which remains trapped in the material conveying means 18 are activated simultaneously upon reaching the closed condition of passage of the material by the valve means 20.

Advantageously, the means 22 for unloading the material that remains trapped in the material conveying means 18, comprise means 25 which are designed to provide a pressure condition in the material conveying means 18 more specifically corresponding to the atmospheric pressure or to the pressure of the environment outside, and such as to allow or induce the unloading of the material from the conveying means 18.

Basically, advantageously, the means 22 for unloading the material that remains trapped in the material conveying means 18 are designed to put an area, in particular an upstream area, of the material conveying means 18 in air communication with the outside environment.

Preferably, as illustrated, the means 22 for unloading the material that remains trapped in the material conveying means 18 are designed to put an area of the material conveying means 18 which is located downstream of the valve means 20, more specifically immediately downstream of the valve means 20, in air communication with the outside environment.

Advantageously, the means 22 for unloading the material that remains trapped in the material conveying means 18, more specifically the means 25 which are designed to provide a pressure condition in the material conveying means 18, such as to allow or induce the unloading of the material, comprise opening means, provided in 221, which are made in the material conveying means 18 and which place the inside of the conveying means 18 in communication with the outside of these.

More specifically, the opening means 221 are made in the conveying means 18 close to the valve means 20 and, preferably, as shown in the drawings, immediately downstream of the valve means 20.

According to the invention, capping means 26 are provided which are designed to open and close the opening means 221, and more specifically to open and close the connection with the opening means 221.

Furthermore these capping means 26 are designed to open and close the connection of the opening means 221 with the source generating the pressure condition such as to allow or induce the unloading of the material from the conveying means 18 and, more specifically, that are designed to open and close the communication of the opening means 221 with the outside environment.

Basically, advantageously, the opening means 221 which are made in the material conveying means 18 are in air communication with the outside environment through the corresponding capping means which can be opened and, respectively, closed 26.

It is understood that the unloading means 22 of the material that remains trapped in the material conveying means are normally in a deactivated condition when the valve means 20 are in open condition of the passage of material with the material housing chamber of the tank body 16.

Advantageously, the openable and reclosable capping means 26 are operatively connected with the valve means 20 to close the communication of the opening means 221 with the source generating the pressure condition which is such as to allow or induce the unloading of the material from the conveying means 18 and, more specifically, to close the air communication with the outside environment when the valve means 20 are open.

Moreover, advantageously, the openable and reclosable capping means 26 are operatively connected to the valve means 20 to open the communication of the opening means 221 with the source generating the pressure condition which is such as to allow or induce the unloading of the material from the conveying means 18 and, more specifically, to open the communication with the outside environment when the valve means 20 are in closed condition.

Basically, the openable and reclosable capping means 26 are operatively connected with the valve means 20 to close the communication with the outside environment of the opening means 221, when the valve means 20 are open, and, vice versa, to open the communication with the outside environment of the opening means 221, when the valve means 20 are in closed condition.

Advantageously, the openable and reclosable capping means 26 are at the valve means 20, that is, they are carried on the supporting body 220 of the valve means 20.

According to the invention, the capping means comprise respective surface means 26 for engaging and closing the connection of the opening means with the source generating the pressure condition which allows or induce the unloading of the material from the conveying means 18 and, more specifically, to close the communication with the outside environment, and hole means 261 to open the communication with the source generating the pressure condition such as to allow or induce the unloading of the material from the conveying means 18 and, more specifically, to open the communication with the outside environment.

Basically, advantageously, means are provided for actuating and/or deactivating the unloading of the material that remains trapped in the material conveying means 18.

Advantageously, the means for actuating and/or deactivating the unloading of the material from the material conveying means 18 are at the valve means 20, that is they are carried on the supporting body 31 of the valve means 20.

Advantageously, the openable and reclosable capping means 26 are operatively connected, more specifically are integral, with the shutter means of the valve means 20.

Basically, the means for actuating and/or deactivating the unloading of the material from the material conveying means 18 are defined by the means for activating the opening and closing of the valve means 20.

More specifically, the means for actuating and/or deactivating the unloading are defined by means 30 for actuating the valve means 20.

Advantageously, the means 25, which are designed to provide in the material conveying means 18 a pressure condition such as to allow or induce the unloading of the material from the conveying means 18, comprise corresponding duct means 24, in connection with the opening means 221.

The duct means according to the invention have a respective end mouth 241 at and in communication with the opening means 221 and a respective opposite end mouth 242, at the valve means 20, the opposite end mouth being designed to be put in communication with the source that provides a pressure condition such as to allow or induce the unloading of the material from the conveying means 18.

More specifically, the opposite end mouth 242 is supported on an element, or plate, 243 protruding from the body supporting the valve means 20, in particular above the latter and in a position longitudinally in front of the respective tower 35 for supporting the actuator means, which will be described in more detail below.

Preferably, as illustrated, the plate, or support, for fixing the respective end of the duct extends parallel to the respective face or wall 351 of the tower 35 for supporting the actuator means.

Advantageously, the openable and reclosable capping means 26 are at, and designed to open and close, the opposite end mouth 242 of the duct means 24.

Advantageously, the openable and reclosable capping means 26 are designed to form mobile means, more specifically mobile by translation, preferably, as illustrated, according to a plane substantially perpendicular to the plane wherein lie the opening means 221 provided in the conveying means 18.

The means are provided for actuating the openable and reclosable capping means 26 between a closed position and an open position of the opening means 221 made in the conveying means 18.

Advantageously, the duct means 24 extend between, and are supported by, the conveying means 18 and by the frame body 31 supporting the valve means 20, more specifically having respective ends which are connected, in particular in an integral fashion, to the conveying means 18 and to the frame body 31 supporting the valve means 20.

Basically, the openable and reclosable capping means are defined by corresponding plate, or sheet, means 26.

Advantageously, the opening means made in the conveying means 18 comprise an opening, and preferably, as illustrated, a first and a second opening 221, 221.

As illustrated, the first and second openings 221, 221 made in the conveying means 18 are close together, preferably lying on the same plane transversal to the direction of extension of the conveying means 18. Moreover, as illustrated, the first and second opening 221, 221 open upwards.

Advantageously, the duct means comprise, in turn, a first, and preferably a first and a second, tubular element 24, 24, each extending, respectively, from a corresponding opening 221, 221 made in the conveying means 18.

Advantageously, the first and second tubular elements 24, 24 extend adjacent to each other and are preferably parallel, or substantially parallel to each other, in particular each of these having a corresponding curved configuration.

Advantageously, the capping means comprise a first, and preferably a first and a second, surface 26, 26 respectively designed to close the connection with the corresponding opening means 221, 221, and in particular engaging and closing the corresponding opposite end mouth of the respective duct means, or respective tubular elements, 24, 24.

More specifically, the first and second capping surface 26, 26 are positioned transversally spaced from each other, more specifically substantially transversal to each other.

Advantageously, the respective capping surface, more specifically the first and the second capping surface 26, 26, is defined by a respective zone of a corresponding face, more specifically flat face, of a corresponding capping body 27.

Advantageously, the capping means comprise a hole, and preferably a first and a second hole, 261, 261 which is designed to open the connection with the opening means 221, 221.

Advantageously, the respective hole 261, 261 can be positioned, in the open condition of the connection with the corresponding opening means 221, 221, at the respective opening, in particular an end portion opposite to the opening means 221, 221 of the corresponding duct means, or respective tubular element, 24, 24.

Advantageously, the respective hole, and preferably both the first and the second 261, 261, are provided in the single capping body 27.

As may be inferred, the first and second hole 261, 261 are positioned transversally spaced from each other, and, more specifically substantially transversal to each other.

More specifically, advantageously, the respective hole 261, 261 is formed in a corresponding lobe 262, 262 which protrudes at the top from the body 27 defining the capping means 26.

As illustrated there is a first and a second lobe, in particular parallel, 262, 262 upwardly protruding from the body 27 defining the capping means 26.

The capping body 27 is in the form of a plate, in particular flat, defining the shutter body of the valve means 20 and/or which is integral with the movement rod of the shutter body of the valve means 20.

Advantageously, the first and second hole 261, 261 of the capping means and/or of the first and second capping surface 26, 26 are positioned laterally to the movement rod of the shutter body of the valve means 20.

More specifically, the valve body 20 is in the form of a body having a front wall 31' and a rear wall 31" having respective cavities 33, preferably circumferential, forming as a whole the cavity for the passage of the material.

The front and rear walls 31', 31" are joined to each other at the respective peripheral edges and define between them a compartment 37, longitudinally narrow or short, in which moves, in particular translates, the sheet shutter body 32, which extends outside the translation compartment 37 through a slit 371 transversely elongate and open perpendicularly or above, which is suitably closed by corresponding sealing elements 372.

As illustrated, the valve body has, on the slot side, a tower 35 for guiding the actuator rod 301, above which is preferably supported and fixed the corresponding actuator from which the rod extends.

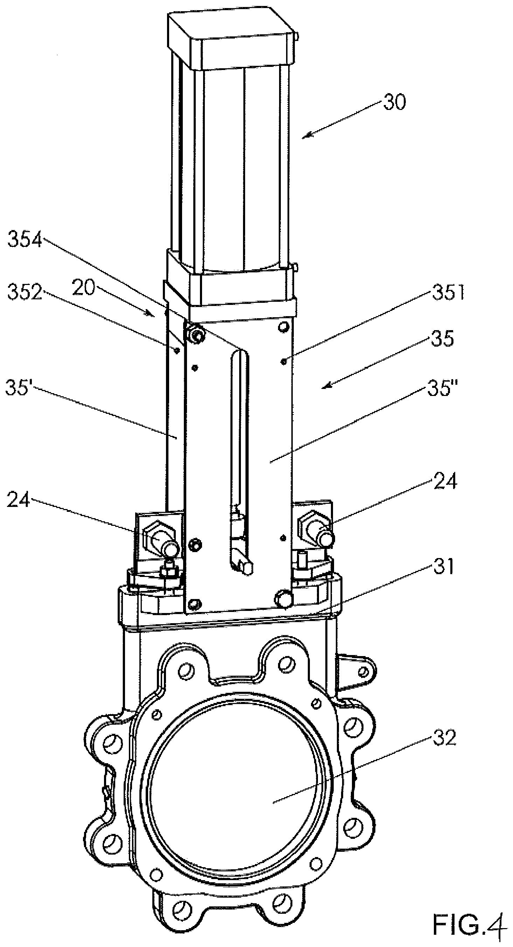

The guide tower 35 comprises opposite plate-like elements 351, 352 which have a respective oblong indentation 354, extending perpendicularly to the upper slit of the valve body 31, that is, according to the direction of translation of the shutter body, a respective guide pin 355, which is integral with the drive rod 301, sliding in the indentation 354 and moving between a lower end, clearly illustrated in Figure 4, and an upper end, not illustrated in the accompanying drawings, of the indentation.

More specifically, as illustrated, the guiding and supporting tower 35 has, at the top, a plate 353 for fixing actuator means 30 and connecting the front and rear walls 351, 352 of the tower.

Advantageously, the respective hole 261, 261 of the capping means and/or the respective capping surface 26, 26 is positioned laterally to the tower 35 for guiding the movement rod 301 of the shutter body 32 of the valve means 20.

More specifically, the respective first and second hole 261, 261 of the capping means and/or the first and second capping surface 26, 26 are positioned transversely at the lateral transversal opposite edges 35', 35" of the guide tower 35 of the movement rod of the shutter body of the valve means 20.

Similarly, the duct means 24, 24 are fixed, in 243, to the body 31 supporting the valve means, above the portion defining the compartment 37, of translation of the shutter body in such a way that the respective end opening 242, 242 is positioned beyond the respective lateral edge 35', 35" of the guide tower 35 of the rod for moving the shutter body of the valve means 20.

More specifically, the duct means 24, 24 are fixed to the supporting body 31 in such a way that the respective end openings 242, 242 are positioned beyond the opposite lateral transversal edge 35', 35" of the guide tower 35 of the rod for moving the shutter body of the valve means 20.

Basically, as mentioned, the valve means 20 comprise actuator means which are in the form of a respective plunger 30 which moves the shutter body or gate-like slab 32 between a corresponding rod coming out of the plunger cylinder.

Advantageously, the valve means 20 comprise first elastic sealing means 34 which are designed to engage and seal with a transversal face 321 of the shutter body 32, and second elastic sealing means 36 which are designed to engage and seal with an opposite transversal face 322 of the shutter body 32.

Advantageously, the respective elastic sealing means 34, 34 make contact with the corresponding face 321, 322 of the shutter body 32 at a zone which is radially outside the outer peripheral edge 323 of the shutter body 32.

Basically, neither the first nor second elastic means 34, 34 make contact with the outer peripheral edge 323 of the shutter body 32.

Advantageously, the respective elastic sealing means 34, 34 make contact with the corresponding face 321, 322 of the shutter body 32 at a respective zone close to the peripheral edge 323 of the shutter body 32.

More specifically, as illustrated, the first and second elastic sealing means 34, 34 make contact with the opposite transversal faces 321, 322 of the shutter body 32 at the same circumferential position or same radial position.

More specifically, the respective elastic sealing means are in the form of a corresponding annular body 34, 34 made of elastomeric material, more specifically of cut-resistant material.

Advantageously, the first and second annular sealing body 34, 34 are identical to each other, or substantially identical.

More specifically, advantageously, the respective annular sealing body 34, 34 comprises a longitudinal portion 341 for engaging the opposite face 321, 322 of the shutter body 32, the longitudinal portion ending with a corresponding enlarged end 341' for contact with the corresponding face of the shutter body.

Advantageously, the respective annular sealing body 34, 34 comprises a respective outer radial portion 342 for insertion in a corresponding seat of the supporting body 31 of the valve means 20.

More specifically, advantageously, the supporting body 31 has, therefore, a first and a second annular seat 311, 311 longitudinally spaced from each other, the annular seats 311, 311 being designed to receive a corresponding circumferential portion, radially protruding, 342, 342 of respective elastic sealing means 34, 34.

As illustrated, the respective receiving seat 311, 311 for a corresponding portion 342, 342 of respective elastic sealing means 34, 34 is defined by first and a second protruding annular segments 312, 313 which extend longitudinally spaced to define, in between them, the corresponding seat 311 for the corresponding elastic sealing means 34.

As illustrated, for the respective, in particular for each, retaining seat 311, 311 of the corresponding elastic sealing means 34, 34, the first annular segment 312, which is situated longitudinally toward the outside of the valve means 20, has a radial height greater than the one of the second annular segment, situated longitudinally toward the central part of the valve means 20.

As illustrated, the first and second annular segment 312, 313 of the respective retaining seat 311 for corresponding elastic sealing means 34 extend circumferentially, protruding radially from the cylindrical surface 135 defining the cavity 33 of passage of the liquid of the respective valve 20.

Basically, the protruding radial portion 342, 342 of the respective elastic sealing means 34, 34 has a corresponding peripheral face, which engages against the circumferential bottom surface 135 of the corresponding seat 311.

Further, the protruding radial portion 342, 342 of the respective elastic sealing means 34, 34 has opposite transversal faces, which engage against opposite transversal abutment surfaces respectively defined by the first and second annular abutment 312, 313.

Advantageously, as illustrated, the valve means 20 comprise means 40, 40 for locking respective elastic sealing means 34, 34 in position.

Advantageously, the means for locking respective elastic sealing means in position comprise respective first and second annular locking bodies 40, 40 for the first and for the second annular sealing body 34, 34, respectively.

More specifically the first and second annular locking bodies 40, 40 are longitudinally spaced defining between them a circumferential space 37' for inserting the shutter body 32, in particular for the outer peripheral portion, or crown, of the shutter body 32.

More specifically, as illustrated, the first and second annular locking bodies 40, 40 are positioned radially inside respective elastic sealing means 34, 34, defining a corresponding circumferential outer surface 400 for engaging the corresponding inside peripheral surface of the longitudinal portion 341 of the respective elastic sealing means or annular body 34.

Advantageously, as illustrated, the elastic sealing means 34, and in particular the respective longitudinal portion 341 of the elastic sealing means 34, protrudes centrally beyond the edge of the respective annular locking body 40, or of the perimeter sleeve 401 thereof.

Further advantageously, the respective annular locking body 40 comprises a perimeter sleeve 401, which has a longitudinal end, which in use faces towards the central zone of the valve means 20, which is externally chamfered to receive or house the corresponding enlarged end of the longitudinal portion 341 of the respective elastic sealing means 34.

Advantageously, the first and second annular locking bodies 40, 40 of the elastic sealing means 34, 34 are identical, or substantially identical.

Advantageously, the respective annular locking body 40, 40 comprises a respective perimeter sleeve, more specifically cylindrical, 401, from which a respective annular segment 402 extends externally, defining a peripheral edge 403 which faces the inner surface 135 of the supporting body 31 of the valve means 20.

The outer annular segment 402 of the respective retaining or annular locking body 40 also defines a transversal abutment surface 404 for engaging against the corresponding transversal surface, in particular longitudinally outer surface, of the first segment 312 protruding from the inner surface of the supporting body 31 of the valve means 20, the transversal surface of the first segment 312 being opposite to the transversal abutment surface defining the corresponding retaining seat 311 of the elastic sealing means 34.

As illustrated, the valve means comprise a respective supporting body 31 at the inner surface 135 of which is provided, in a substantially central position, a circumferential groove 310 for receiving the corresponding outer peripheral edge 323 of the shutter body 32.

More specifically, the respective annular locking body 40, 40 is made of rigid material, preferably thermoplastic resin reinforced with glass fibre, and in particular made of IXEF.

As illustrated, the sheet, or blade, defining the shutter body 32 is made of metallic material.

As illustrated, the sheet, or blade, defining the shutter body 32 has an outer peripheral profile, or edge, 323, in particular in the form of a circular profile, which is suitably chamfered.

As illustrated, means are provided for retaining the respective annular locking body 40, 40 in the supporting body of the valve means, the retaining means being in the form of a corresponding annular element, more specifically an elastic O-ring 50, 50 which is located between an outer longitudinal protrusion 405 of the sleeve 401 of the annular locking body 40 and the inner peripheral surface 135 of the supporting body 31, which forms the cavity 33 for the passage of the material, and at the longitudinal outer side of the segment 402 protruding radially from the sleeve 401 of the body for locking the sealing means 34.

Advantageously, the supporting body of the valve means has an inner perimeter surface 135 which lies on a respective single cylindrical surface.

A vehicle and/or a respective valve 20, or respective parts of these, is therefore provided which can be made in a particularly easy manner and with decidedly limited costs.

## Claims

1. A cask vehicle (10), more specifically a cask wagon or a tank truck, for transporting a fluid or semi-fluid material, preferably in the form of slurry or the like, comprises a tank body (16) defining a chamber for housing the material and means (18) for conveying the material, which connect the housing chamber with the outside environment, more specifically to allow the suction of the material inside the chamber; respective valve means (20) are provided, which are designed to open or close the passage of material between the conveying means (18) and the material housing chamber; the valve means (20) are of the gate-like type and comprise a respective shutter body (32) defined by a corresponding blade or plate that is movable in a translating way in a respective transversal plane; the vehicle further comprising means (22) for unloading the material that remains trapped in the material conveying means (18) connecting the housing chamber with the outside environment; said means (22) provided for unloading the material that remains trapped in the material conveying means (18) being in the form of means for automatically actuating the unloading of the material; said means (22) provided for unloading the material that remains trapped in the material conveying means (18) comprising means (25) which are designed to provide a pressure condition in the material conveying means, more specifically corresponding to the atmospheric pressure or to the pressure of the environment outside the vehicle, such as to allow or induce the unloading of the material from the conveying means (18); said means (25) that are designed to provide a pressure condition in the material conveying means (18) comprising opening means (221), which opening means (221) are made in the material conveying means (18); capping means (26) being provided that are designed to open and close the opening means (221), and more specifically the connection of the opening means (221) with the source generating the pressure condition such as to allow or induce the unloading of the material from the conveying means (18) and, more specifically, that are designed to open and close the communication with the outside environment; the opening means (221) being in connection with the means (25) that are designed to provide an unloading pressure condition of the material through corresponding duct means (24); more specifically the duct means (24) have having a respective end mouth (241) at and in communication with the opening means (221) and a respective opposite end mouth (242), which opposite end mouth (242) being designed to be put in communication with the source that provides a pressure condition in the material conveying means (18) such as to allow or induce the unloading of the material from the conveying means (18); the openable and reclosable capping means (26) being especially at, and designed to open and close, the opposite end mouth (242); the cask vehicle being **characterised in that** the respective opposite end mouth (242) of duct means (24) is at the valve means (20); **in that** said capping means comprising surface means (26) for closing the connection of the opening means (221) with the source generating the pressure condition such as to allow or induce the unloading of the material from the conveying means (18) and, more specifically, to close the communication with the outside environment, and a respective hole (261) to open the communication with the source generating the pressure condition such as to allow or induce the unloading of the material from the conveying means (18) and, more specifically, to open the communication with the outside environment; and **in that** the respective hole (261) is provided in the single capping body (27), said capping body (27) being in the form of a plate defining the shutter body of the valve means (20).

2. The vehicle according to claim 1, **characterised in that** the unloading means (22) of the material that remains trapped in the material conveying means (18) are designed to induce the unloading of the material when the valve means (20) are in closed condition of the passage of material.

3. The vehicle according to any one of the preceding claims, **characterised in that** the unloading means (22) of the material that remains trapped in the material conveying means (18) are normally in a deactivated condition when the valve means (20) are in open condition of the passage of material with the material housing chamber of the tank body.

4. The vehicle according to any one of the preceding claims, **characterised in that** means (22) are provided for unloading the material that remains trapped in the material conveying means (18), which are designed to put an area of the material conveying means (18) in air communication with the outside environment.

5. The vehicle according to claim 4,**characterised in that** the means (22) for unloading the material that remains trapped in the material conveying means (18) are designed to put an area of the material conveying means (18), which is located downstream of the valve means (20), more specifically immediately downstream of the valve means (20), in air communication with the outside environment.

6. The vehicle according to any one of the preceding claims, **characterised in that** means (30) are provided for actuating and/or deactivating the unloading of the material that remains trapped in the material conveying means (18).

7. The vehicle according to claim 6,**characterised in that** the means (30) for actuating and/or deactivating the unloading of the material from the material conveying means (18) are at the valve means (20), that is they are carried on the supporting body (120) of the valve means (20); more specifically the means for actuating and/or deactivating the unloading of the trapped material being defined by means (30) for actuating the valve means (20).

8. The vehicle according to any one of the preceding claims, **characterised in that** the opening means (221) are made in the material conveying means (18) close to the valve means (20) and, preferably immediately downstream of the valve means (20).

9. The vehicle according to any one of the preceding claims, **characterised in that** the valve means (20) comprise a supporting body (31) defining a respective cavity (33) for the passage of the material of the valve means (20), which is open and closed, respectively, by a corresponding shutter body (32).

10. The vehicle according to claim 9,**characterised in that** the valve means (20) comprise corresponding means (30) for actuating the shutter body (32), more specifically, in the form of a respective actuator, preferably linear and especially in the form of a cylinder controlled by a respective pressurised fluid; more specifically, the valve means (20) comprise a corresponding connection rod between the actuator means (30) and the shutter body (32).

11. The vehicle according to any one of the preceding claims, **characterised in that** the openable and reclosable capping means (26) are in the form of translatory means, more specifically according to a plane substantially perpendicular to the plane wherein lie the opening means (221) made in the conveying means (18).

12. The vehicle according to any one of the preceding claims, **characterised in that** the duct means comprise, in turn, a first, and preferably a first and a second, tubular element (24, 24), each extending, respectively, from a corresponding opening (221, 221) made in the conveying means (18).

13. The vehicle according to claim 12, **characterised in that** the capping means comprise a first, and preferably a first and a second closing surface (26, 26) which is designed to close the connection with the corresponding opening means (221, 221), and in particular engaging and closing the corresponding opposite end mouth of the respective duct means, or respective tubular elements, (24, 24).

14. The vehicle according to claim 13, **characterised in that** the first and second capping surface (26, 26) are positioned transversally spaced from each other, more specifically substantially transversal to each other.

15. The vehicle according to claim 14, **characterised in that** the capping means comprise a first and a second hole (261, 261) which are designed to open the connection with the opening means (221, 221), the first and the second hole (261, 261) are provided in the single capping body and are positioned transversally spaced from each other, and, more specifically substantially transversal to each other.

## Patentansprüche

1. Fassfahrzeug (10), insbesondere Fasswagen oder Tankwagen für den Transport eines Fluides oder von halbflüssigem Material, vorzugsweise in Form von Schlamm oder dergleichen, umfassend einen Tankkörper (16), der eine Kammer zum Aufnehmen des Materials und Mittel (18) zum Transportieren des Materials definiert, die die Aufnahmekammer mit der Umgebung verbinden oder insbesondere das Ansaugen des Materials innerhalb der Kammer ermöglichen; es sind entsprechende Ventilmittel (20) vorgesehen, die den Materialdurchgang zwischen den Transportmitteln (18) und der das Material enthaltenden Kammer öffnen oder schließen sollen; wobei die Ventilmittel (20) sind einer Tür ähnlich und umfassen einen jeweiligen Verschluss-Körper (32), der durch eine entsprechende Klinge oder Platte definiert ist, die mit einer Translationsbewegung in einer jeweiligen Querebene beweglich sind; wobei das Fahrzeug ferner Mittel (22) zum Entladen des Materials umfasst, das in dem Transportmittel (18) des Materials eingeschlossen bleibt, das die Aufnahmekammer mit der Umgebung verbindet; wobei die Mittel (22) zum Entladen des Materials, das in den Transportmitteln (18) des Materials eingeschlossen bleibt, die Form von Mitteln zum automatischen Entladen des Materials aufwiesen; wobei die Mittel (22), die zum Entladen des Materials vorgesehen sind, das in den Transportmitteln (18) des Materials eingeschlossen bleibt, Mittel (25) umfassen, die vorgesehen sind um einen Druckzustand in den Transportmitteln des Materials bereitzustellen, insbesondere entsprechend dem atmosphärischen Druck oder dem Umgebungsdruck außerhalb des Fahrzeugs derart, dass das Entladen des Materials vom Transportmittel (18) ermöglicht oder veranlasst wird; wobei die Mittel (25), die vorgesehen sind um einen Druckzustand in den Transportmitteln (18) des Materials bereitzustellen, Öffnungsmittel (221) umfassen, wobei die Öffnungsmittel (221) in den Transportmitteln (18) des Materials ausgebildet sind; wobei die Verschluß-Mittel (26) zum Öffnen und Schließen der Öffnungsmittel (221) ausgebildet sind und insbesondere für die Verbindung der Öffnungsmittel (221) mit der Quelle vorgesehen sind, die den Druckzustand erzeugt, um das Entladen des Materials aus den Transportmitteln (18) zu gestatten oder induzieren, und wobei sie insbesondere zum Öffnen und Schließen der Kommunikation mit der Umgebung vorgesehen sind, wobei das Öffnungsmittel (221) in Verbindung mit den Mitteln (25) stehen, die das Bereitstellen eines Druckzustands zum Entladen des Materials durch entsprechende Leitungsmittel (24) ermöglichen, insbesondere wobei die Leitungsmittel (24) jeweils einen entsprechenden Endmündung (241) in Korrespondenz und in Kommunikation mit den Öffnungsmitteln (221) und eine jeweilige gegenüberliegende Endmündung (242) aufweisen, wobei die gegenüberliegende Endmündung (242) vorgesehen ist, um mit der Quelle in Verbindung gebracht zu werden, die einen Druckzustand in den Transportmitteln (18) des Materials bereitstellt, um das Entladen des Materials von den Transportmitteln (18) zu ermöglichen oder zu induzieren; wobei die Verschließ-Mittel (26), die geöffnet und wieder geschlossen werden können, insbesondere zum Öffnen und Schließen der gegenüberliegenden Endmündung (242) vorgesehen sind; wobei das Fassfahrzeug ist **dadurch gekennzeichnet, dass** die jeweilige gegenüberliegende Endmündung (242) der Leitungsmittel (24) mit den Ventilmitteln (20) übereinstimmt; dass die Verschließ-Mittel Oberflächenmittel (26) zum Schließen der Verbindung zwischen den Öffnungsmitteln (221) und der Quelle, die den Druckzustand erzeugt, umfassen, um das Entladen des Materials von den Transportmitteln (18) zu ermöglichen oder zu induzieren. und insbesondere, um die Kommunikation mit der Umgebung zu schließen, und ein entsprechendes Loch (261) aufweisen, um die Kommunikation mit der Quelle zu öffnen, die den Druckzustand erzeugt, um das Entladen des Materials von den Transportmitteln (18) zu ermöglichen oder zu induzieren, und insbesondere, um die Kommunikation mit der Umgebung zu öffnen, und dass das jeweilige Loch (261) in dem einzelnen Abdeckkörper (27) erhalten wird, wobei der Abdeckkörper (27) die Form einer Platte hat, welche den Verschluss-Körper der Ventilmittel (20) definiert.

2. Fahrzeug nach Anspruch 1, **dadurch gekennzeichnet, dass** die Entladungsmittel (22) des Materials, das in den Transportmitteln (18) des Materials eingeschlossen bleibt, vorgesehen sind um die Entladung des Materials zu induzieren, wenn sich die Ventilmittel (20) im geschlossenen Zustand des Materialdurchgangs befinden.

3. Fahrzeug nach einem der vorhergehenden Ansprüche, **dadurch gekennzeichnet, dass** die Entladungsmittel (22) des Materials, das in den Transportmitteln (18) des Materials eingeschlossen bleibt, sich normalerweise in einem nicht betätigten Zustand befinden, wenn die Ventilmittel (20) sich im offenen Zustand des Materialdurchgangs mit der Aufnahmekammer des Materials des Tankkörpers, befinden.

4. Fahrzeug nach einem der vorhergehenden Ansprüche, **dadurch gekennzeichnet, dass** Mittel (22) zum Entladen des Materials vorgesehen sind, das in den Transportmitteln (18) des Materials eingeschlossen bleibt, die vorgesehen sind, um bei der Luftkommunikation mit der Umgebung einen Bereich der Transportmittel (18) des Materials zu ermöglichen.

5. Fahrzeug nach Anspruch 4, **dadurch gekennzeichnet, dass** Mittel (22) zum Entladen des Materials, das in den Materialtransportmitteln (18) eingeschlossen bleibt, vorgesehen sind, um einen Bereich der Transportmittel (18) des Materials in Luftkommunikation mit der Umgebung zu bringen, der sich stromabwärts der Ventilmittel (20), insbesondere unmittelbar stromabwärts der Ventilmittel (20), befindet.

6. Fahrzeug nach einem der vorhergehenden Ansprüche, **dadurch gekennzeichnet, dass** Mittel (30) zum Aktivieren oder Deaktivieren des Entladens des Materials vorgesehen sind, das in den Transportmitteln (18) des Materials eingeschlossen bleibt.

7. Fahrzeug nach Anspruch 6, **dadurch gekennzeichnet, dass** sich die Mittel (30) zum Aktivieren und/oder Deaktivieren des Entladens des Materials von den Transportmitteln (18) des Materials in der Nähe der Ventilmittel (20) befinden, d.h. sie werden transportiert an dem Stützkörper (120) der Ventilmittel (20), wobei insbesondere die Mittel zum Aktivieren und/oder Deaktivieren des Entladens des eingeschlossenen Materials durch Mittel (30) zum Aktivieren der Ventilmittel (20) definiert werden.

8. Fahrzeug nach einem der vorhergehenden Ansprüche, **dadurch gekennzeichnet, dass** die Öffnungsmittel (221) in den Transportmitteln (18) des Materials in der Nähe der Ventilmittel (20) und vorzugsweise unmittelbar stromabwärts der Ventilmittel (20) ausgeführt sind.

9. Fahrzeug nach einem der vorhergehenden Ansprüche, **dadurch gekennzeichnet, dass** die Ventilmittel (20) einen Stützkörper (31) umfassen, der einen jeweiligen Hohlraum (33) für den Durchgang des Materials der Ventilmittel (20) definiert, der offen ist bzw. durch einen entsprechenden Verschluss-Körper (32) verschlossen ist.

10. Fahrzeug nach Anspruch 9, **dadurch gekennzeichnet, dass** die Ventilmittel (20) entsprechende Mittel (30) zur Aktivierung des Schließkörpers (32) umfassen, insbesondere in Form eines entsprechenden Aktuators, der vorzugsweise linear und insbesondere die Form eines Zylinders aufweist, der von einem jeweiligen unter Druck stehenden Fluid gesteuert wird; insbesondere umfassen die Ventilmittel (20) eine entsprechende Verbindungsstange zwischen den Aktuator-Mitteln (30) und dem Schließkörper (32) .

11. Fahrzeug nach einem der vorhergehenden Ansprüche, **dadurch gekennzeichnet, dass** die Schließmittel (26) geöffnet und geschlossen werden können und die Form von Translationsmitteln, insbesondere nach einer Ebene aufweisen, die im wesentlichen senkrecht zu der Ebene, in der sich die in den Transportmitteln (18) aufgebrachten Öffnungsmittel (221) finden.

12. Fahrzeug nach einem der vorhergehenden Ansprüche, **dadurch gekennzeichnet, dass** die Leitungsmittel wiederum einen erstes, und vorzugsweise ein erstes und ein zweites rohrförmige Element (24, 24) umfassen, die jeweils von einer entsprechenden Öffnung (221, 221) in den Transportmittel (18) erhalten sind.

13. Fahrzeug nach Anspruch 12, **dadurch gekennzeichnet, dass** die Schließmittel eine erste und vorzugsweise eine erste und eine zweite Schließfläche (26, 26) umfassen, die um die Verbindung mit den entsprechenden Öffnungsmittel (221, 221) zum Schließen, und insbesondere zum Koppeln und Schließen der entsprechenden gegenüberliegenden Endmündung der jeweiligen Leitungsmittel oder der jeweiligen Rohrelemente (24, 24), vorgesehen sind.

14. Fahrzeug nach Anspruch 13, **dadurch gekennzeichnet, dass** die erste und die zweite Schließfläche (26, 26) quer und voneinander beabstandet sind, insbesondere im wesentlichen quer zueinander, angeordnet sind.

15. Fahrzeug nach Anspruch 14, **dadurch gekennzeichnet, dass** die Schließmittel ein erstes und ein zweites Loch (261, 261) aufweisen, die vorgesehen sind, um die Verbindung mit den Öffnungsmitteln (221, 221) zu öffnen, und wobei das erste und das zweite Loch (261, 261) in dem einzelnen Schließkörper ausgebildet und in einem Abstand voneinander und insbesondere im wesentlichen quer zueinander, angeordnet sind.

## Revendications

1. Véhicule-baril (10), plus particulièrement un wagon-baril ou un wagon-citerne, pour transporter un fluide ou un matériau semi-fluide, de préférence sous forme de suspension ou similaire, comprenant un corps de réservoir (16) qui définit une chambre pour loger le matériau et avec des moyens (18) pour transporter le matériau, qui relient la chambre de logement à l'environnement extérieur, plus particulièrement pour permettre l'aspiration du matériau à l'intérieur de la chambre; des moyens de soupape respectifs (20) sont prévus, qui sont destinés à ouvrir ou fermer le passage du matériau entre les moyens de transport (18) et la chambre de logement du matériau; les moyens de soupape (20) sont du type similaire à une porte et comprennent un corps d'obturation respectif (32) défini par une lame ou plaque correspondante qui est mobile avec un mouvement de translation dans un plan transversal respectif; le véhicule comprend également des moyens (22) pour décharger le matériau qui est piégé dans le moyen de transport (18) du matériau qui relie la chambre de logement à l'environnement extérieur; les moyens (22) prévus pour décharger le matériau qui est piégé dans les moyens de transport du matériau (18) ont la forme de moyens pour décharger automatiquement le matériau; les moyens (22) prévus pour décharger le matériau piégé dans les moyens de transport du matériau (18) comprennent des moyens (25) prévus pour fournir une condition sous pression dans les moyens de transport du matériau, correspondant plus particulièrement à la pression atmosphérique ou à la pression de l'environnement à l'extérieur du véhicule, de manière à permettre ou à induire le déchargement du matériau du moyen de transport (18); le moyen (25) prévu pour fournir une condition sous pression dans le moyen de transport du matériau (18) comprend des moyens d'ouverture (221), lesquels moyens d'ouverture (221) étant formés dans le moyen de transport du matériau (18); des moyens de coiffage (26) étant prévus pour ouvrir et fermer les moyens d'ouverture (221), et plus particulièrement la connexion des moyens d'ouverture (221) avec la source qui génère l'état sous pression, de manière à permettre ou induire la décharge du matériau du moyen de transport (18), et plus particulièrement, étant prévus pour ouvrir et fermer la communication avec l'environnement extérieur, les moyens d'ouverture (221) étant en liaison avec les moyens (25) prévus pour fournir une condition sous pression pour décharger le matériau à travers des moyens de conduit correspondants (24), plus particulièrement les moyens de conduit (24) ayant chacun une bouche d'extrémité respective (241) en correspondance et en communication avec les moyens d'ouverture (221) et une bouche d'extrémité opposée respective (242), la bouche d'extrémité opposée (242) étant prévue pour être mise en communication avec la source qui fournit une condition sous pression dans les moyen des transport (18) du matériau, de manière à permettre ou à induire la décharge du matériau des moyens de transport (18); les moyens de coiffage (26) pouvant être ouverts et refermés, et en particulier étant prévus pour ouvrier et fermer la bouche d'extrémité opposée (242); le véhicule-baril étant **caractérisé en ce que** la bouche d'extrémité opposée respective (242) du moyen de conduit (24) est en correspondance avec les moyens de soupape (20); que les moyens de coiffage comprennent des moyens de surface (26) pour fermer la connexion entre les moyens d'ouverture (221) et la source qui génère l'état sous pression, de manière à permettre ou à induire la décharge du matériau à partir des moyens de transport (18), et plus particulièrement pour fermer la communication avec l'environnement extérieur, et avec un trou respectif (261) pour ouvrir la communication avec la source qui génère l'état sous pression, de manière à permettre ou à induire la décharge du matériau du moyen de transport (18) et plus particulièrement pour ouvrir la communication avec l'environnement extérieur, et que le trou respectif (261) est obtenu dans le corps de coiffage unique (27), le corps de coiffage (27) ayant la forme d'une plaque qui définit le corps d'obturation des moyens de valve (20).

2. Véhicule selon la revendication 1, **caractérisé en ce que** les moyens de décharge (22) du matériau qui restent piégés dans les moyens de transport (18) du matériau sont prévus pour induire la décharge de matériau lorsque les moyens de soupape (20) sont situés dans l'état fermé du passage du matériau.

3. Véhicule selon l'une des revendications précédentes, **caractérisé en ce que** les moyens de décharge (22) du matériau qui reste piégé dans les moyens de transport (18) de matériau sont normalement dans un état désactivé, lorsque les moyens de soupape (20) sont à l'état ouvert du passage de matériau avec la chambre pour loger le matériau du corps de réservoir.

4. Véhicule selon l'une des revendications précédentes, **caractérisé en ce que** des moyens (22) sont prévus pour décharger le matériau qui reste piégé dans les moyens de transport (18) du matériau, qui sont prévus pour mettre en communication aérienne avec l'environnement extérieur une zone du moyen de transport (18) du matériau.

5. Véhicule selon la revendication 4, **caractérisé en ce que** les moyens (22) de décharge du matériau qui reste piégé dans les moyens de transport (18) de matériau sont prévus pour mettre en communication aérienne avec l'environnement extérieur une zone des moyens de transport (18) du matériau, située en aval des moyens de soupape (20), plus particulièrement immédiatement en aval des moyens de soupape (20).

6. Véhicule selon l'une des revendications précédentes, **caractérisé en ce que** des moyens (30) sont prévus pour activer et/ou désactiver la décharge du matériau qui reste piégé dans les moyens de transport (18) du matériau.

7. Véhicule selon la revendication 6, **caractérisé en ce que** les moyens (30) pour activer et/ou désactiver la décharge du matériau des moyens de transport (18) du matériau sont situés à proximité des moyens de soupape (20), c'est-à-dire qu'ils sont transportés sur le corps de support (120) du moyen de soupape (20), plus particulièrement les moyens pour activer et/ou désactiver la décharge du matériau piégé sont définis par des moyens (30) pour activer les moyens de soupape (20).

8. Véhicule selon l'une des revendications précédentes, **caractérisé en ce que** les moyens d'ouverture (221) sont obtenus dans les moyens de transport (18) du matériau, à proximité des moyens de soupape (20), et de préférence immédiatement en aval des moyens de soupape (20).

9. Véhicule selon l'une des revendications précédentes, **caractérisé en ce que** le moyens de soupape (20) comprennent un corps de support (31) qui définit une cavité respective (33) pour le passage du matériau des moyens de soupape (20), qui il est ouverte et fermée respectivement par un corps de fermeture correspondant (32).

10. Véhicule selon la revendication 9, **caractérisé en ce que** les moyens de soupape (20) comprennent des moyens correspondants (30) pour actionner le corps de fermeture (32), plus particulièrement sous la forme d'un actionneur respectif, de préférence linéaire et en particulier sous la forme d'un cylindre commandé par un fluide sous pression respectif; plus particulièrement, les moyens de soupape (20) comprennent une tige de connexion correspondante entre les moyens d'actionnement (30) et le corps de fermeture (32).

11. Véhicule selon l'une des revendications précédentes, **caractérisé en ce que** les moyens de coiffage (26) pouvant être ouverts et refermés (26) se présentent sous la forme de moyens de translation, plus particulièrement selon un plan sensiblement perpendiculaire au plan dans lequel se trouvent les moyens d'ouverture (221) obtenus dans les moyens de transport (18).

12. Véhicule selon l'une des revendications précédentes, **caractérisé en ce que** les moyens de conduit comprennent à leur tour un premier, et de préférence un premier et un deuxième élément tubulaire (24, 24), chacun développé respectivement à partir d'une ouverture correspondante (221, 221) obtenue dans les moyens de transport (18).

13. Véhicule selon la revendication 12, **caractérisé en ce que** les moyens de coiffage comprennent une première, et de préférence une première et une deuxième surface de fermeture (26, 26), prévue pour fermer la connexion avec les moyens d'ouverture correspondants (221, 221), et en particulier pour coupler et fermer la bouche d'extrémité opposée correspondante des moyens de conduit respectifs ou des éléments tubulaires respectifs (24, 24).

14. Véhicule selon la revendication 13, **caractérisé en ce que** les premières et deuxièmes surfaces de coiffage (26, 26) sont positionnées transversalement et espacées l'une de l'autre, plus particulièrement sensiblement transversalement l'une à l'autre.

15. Véhicule selon la revendication 14, **caractérisé en ce que** les moyens de coiffage comprennent un premier et un deuxième trou (261, 261), qui sont prévus pour ouvrir la connexion avec les moyens d'ouverture (221, 221), et les premier et deuxième trou (261, 261) sont réalisés dans le corps de coiffage unique, et sont positionnés transversalement à distance l'un de l'autre, et plus particulièrement sensiblement transversalement l'un à l'autre.
